# EUROPÄISCHE PATENTSCHRIFT

(11) **EP 1 796 949 B1**
(45) Veröffentlichungstag und Bekanntmachung des Hinweises auf die Patenterteilung: **02.11.2011**
(21) Anmeldenummer: 05777966.2
(22) Anmeldetag: 26.08.2005
(51) Int. Cl.: B62D 15/02, B60Q 1/52

(54) **VERFAHREN UND VORRICHTUNG ZUR FAHRERUNTERSTÜTZUNG**
METHOD AND DEVICE FOR DRIVER ASSISTANCE
PROCEDE ET DISPOSITIF D'ASSISTANCE AU CONDUCTEUR

(30) Priorität: 01.10.2004 DE 102004048011
(43) Veröffentlichungstag der Anmeldung: 20.06.2007
(73) Patentinhaber: Robert Bosch GmbH, 70442 Stuttgart (DE)
(72) Erfinder: SCHMITZ, Carsten, 71229 Leonberg (DE)
(86) Internationale Anmeldenummer: PCT/EP2005/054212
(87) Internationale Veröffentlichungsnummer: WO 2006/037696

(56) Entgegenhaltungen:
- DE-A1- 10 039 795
- DE-A1- 10 153 987

## Beschreibung

### Stand der Technik

Die Erfindung betrifft ein Verfahren und eine Vorrichtung zur Fahrerunterstützung.

Derartige Verfahren bzw. Vorrichtungen, sogenannte Fahrerassistenzsysteme, sind in verschiedenen Ausprägungen beschrieben. Ein Beispiel für ein solches Fahrerassistenzsystem ist ein Spurverlassenswarner (Lane-Departure-Warning), welcher den Fahrer bei Verlassen der Fahrspur oder bei drohendem Verlassen der Fahrspur warnt. Ein Beispiel für einen solchen Spurverlassenswarner ist in der EP1074430A1 beschrieben. Dabei wird überprüft, ob das Fahrzeug die beispielsweise durch Fahrbahnrandmarkierungen begrenzte Fahrspur verlässt bzw. zu verlassen droht. Ist dies der Fall, wird der Fahrer gewarnt.

Die DE 10153 987 A1 zeigt eine gattangsgemäße Vorgehensweise, nach der die an den Fahrer übermittelten Informationen daran angepasst werden, ob diese Information zu dem Zeitpunkt wirklich notwendig ist. In Bezug auf den Spurwechsel wird dabei eine Warnung erzeugt, wenn der Fahrer beispielsweise durch Bedienung seines Radios als unaufmerksam erkannt wurde.

Die DE 100 39 795 A1 zeigt, dass eine Warnung beispielsweise beim Spurwechsel ausgegeben wird, wenn der Fahrer als unaufmerksam erkannt wurde, während bei aufmerksamem Fahrer keine Warnung erfolgt.

Die EP 134 72 68 A1 zeigt ein System zur Erfassung des Spurverlassens, welches bei Verlassen der Spur eine Warnung erzeugt wird. Es wird ein sogenannter Spurverlassenswarner dargestellt, bei welchem eine Warnung ausgegeben wird, wenn ohne definitive Spurwechselabsicht des Fahrers das Fahrzeug die Fahrspur verlässt. Ohne definitive Spurwechselabsicht bedeutet in diesem Zusammenhang ein Wegdriften aufgrund einer Unaufmerksamkeit des Fahrers. Ferner ist vorgesehen, ein weiteres Signal über einen Telematikdienst zu erzeugen, wenn die Spur durch das Fahrzeug tatsächlich verlassen wurde. Es wird darauf hingewiesen, dass dieses zusätzliche Signal dann erzeugt wird, wenn der Fahrer trotz Warnung nicht wieder auf die Fahrspur zurückkehrt, wobei der Spurwechsel ohne konkrete Spurwechselabsicht erfolgt ist Das Fehlen einer Spurwechselabsicht und die Unaufmerksamkeit des Fahrers wird also als ein und derselben Zustand betrachtet. Die zusätzliche Warnung wird erzeugt, wenn die Warnung des Spurverlassenswarners nicht den gewünschten Erfolg, dass heißt das Rückführen des Fahrzeugs in die Fahrspur, bewirkt hat.

### Vorteile der Erfindung

Die Verbindung einer Fahrerabsichtserkennung und einer Fahrerzustandserkennung in Verbindung mit Fahrerassistenzsystemen, insbesondere in Verbindung mit einem Spurverlassenswarner, erhöht die Funktionalität und Akzeptanz solcher Fahrerassistenzsysteme. Insbesondere wird dadurch erreicht, dass unnötige Warnungen weitestgehend unterbleiben. Damit verbunden ist eine Erweiterung der Funktionalität des Spurverlassenswarners und eine Verbesserung seiner Alamrate.

Durch eine geeignete Parametrisierung der Module zur Spurwechselabsichtserkennung und zur Fahrerzustandserkennung wird eine weitere Optimierung des Systemsverhaltens erreicht, in dem geeignete Schnittstellen zwischen den beiden Modulen definiert werden.

Weitere Vorteile ergeben sich aus der Beschreibung von AusfÜhrungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsbild für eine Verarbeitungseinheit, in welcher die Spurwechselerkennung und die Fahrerzustandserkennung durchgeführt wird. Diese Verarbeitungseinheit ist am Beispiel eines Spurverlassenswarners dargestellt. In Figur 2 ist ein Flussdiagramm dargestellt, welches die grundsätzliche Vorgehensweise zur Spurwechselklassifizierung im Zusammenhang mit der Spurverlassenswarnung darstellt. Figur 3 zeigt einen modularen Aufbau der Verarbeitungseinheit am Beispiel eines mit einer Spurwechselabsichtserkennung und einer Fahrerzustandserkennung ausgestatteten Spurverlassenswarners. In Figur 4 schließlich ist eine Schnittstelle dargestellt zwischen einem Modul der Spurwechselabsichtserkennung und einem Modul zur Fahrerzustandserkennung, über die vordefinierte Signale ausgetauscht werden.

### Beschreibung von Ausführungsbeispielen

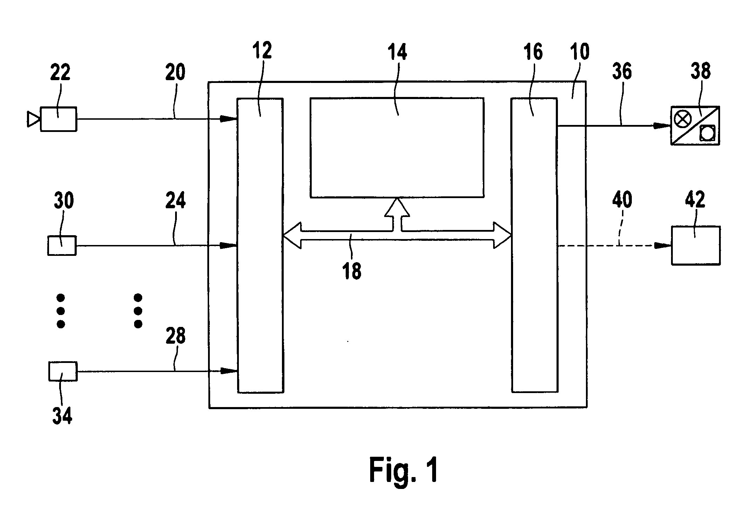

Figur 1 zeigt eine Vorrichtung, welche Teil eines Systems zur Fahrerunterstützung ist (z.B. zur Warnung und/oder zum Ansteuern eines Stellelements zur Querführung des Fahrzeugs bei Verlassen oder drohendem Verlassen der Fahrspur). Dargestellt ist eine Steuer- bzw. Auswerteeinheit 10, welche wenigstens eine Eingangsschaltung 12, einen Mikrocomputer 14 und eine Ausgangsschaltung 16 aufweist. Diese Elemente sind mit einem Bussystem 18 zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches die Szene vor dem Fahrzeug aufnimmt. Entsprechende Bilddaten werden über die Eingangsleitung 20 übermittelt. Ferner sind Eingangsleitungen 24 bis 28 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels und/oder der Gierrate, zur Erfassung einer Größe, welche einen Beschleunigungswunsch des Fahrers repräsentiert, beispielsweise das Ausmaß der Fahrpedalbetätigung durch den Fahrer, zur Erfassung der Geschwindigkeit und/oder der Beschleunigung des Fahrzeugs sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder ein Display für die Anzeige eines Bildes und/oder ein Stellelement für eine haptische Anzeige, mit deren Hilfe der Fahrer über das (drohende) Verlassen der Fahrspur informiert wird. Darüber hinaus oder alternativ dazu ist in einigen Ausführungsbeispielen vorgesehen, über die Ausgangsschaltung 16 und eine Ausgangsleitung 40 ein Stellsystem zu 42 anzusteuern, welches automatisch beispielsweise durch Eingriff in die Lenkung des Fahrzeugs das Fahrzeug wieder in die Spur zurückführt (Querführung) und so das Verlassen der Fahrspur verhindert.

Mittels Methoden der Bildanalyse wird im Ausführungsbeispiel des Spurverlassenswarners auf der Basis der vom Bildsensorsystem zugeführten Bilddaten der Szene vor dem Fahrzeug Spurdaten ermittelt, die den Verlauf und die Größe der Fahrspur repräsentieren. So werden z.B. die Fahrspurrandmarkierungen (linker und/oder rechter Fahrspurrand) erfasst und der Verlauf des jeweiligen Fahrspurrandes beispielsweise als Polynom (Potenzfunktion dritter Ordnung) angenähert. Ferner wird der Verlauf die Fahrspur des Fahrzeugs, beispielsweise für das rechte und/oder linke Rad, aus Fahrzeuggeometriegrößen, den aktuellen und ggf. vergangenen Größen der Fahrzeuggeschwindigkeit, dem Lenkwinkel oder der Gierrate, etc. berechnet und ebenfalls als Polynom dargestellt. Aus den genannten Daten werden weitere Spurdaten berechnet, beispielsweise der laterale Abstand zwischen Spurmarkierung und Spur des Fahrzeugs (rechte Seite zum rechten Rand, linke Seite zum linken Rand), die Krümmung der Fahrspur, und/oder der Winkel zwischen Fahrspur und Spurmarkierung (rechte Fahrspur zum rechten Rand, linke Fahrspur zum linken Rand) anhand von Tangentenvergleichen. Daraus wird in einer Ausführung ggf. auch die erwartete Zeit bis zum Kreuzen der Linien (time to line crossing) errechnet. Die Warnung erfolgt im bevorzugtem Ausführungsbeispiel bei Überschreiten eines vorgegebenen lateralen Abstands oder bei Unterschreiten eines vorgegebenen Zeitwertes.

Wesentlich bei einer solchen Funktion ist, dass der Fahrer nur dann gewarnt wird, wenn er ein Überfahren der Spurmarkierung tatsächlich nicht beabsichtigt.

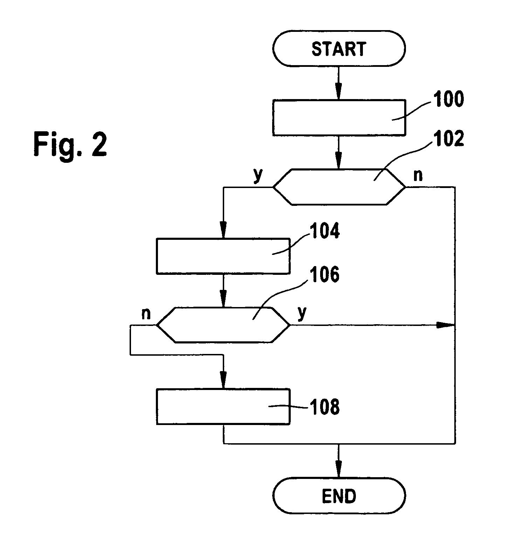

Figur 2 zeigt ein Flussdiagramm, bei welchem der skizzierte Spurverlassenswarner durch einen Klassifikator ergänzt ist, der auf der Basis von Betriebsgrößen, des Fahrzeugs die Spurwechselsituation bewertet und in "unbeabsichtigter Spurwechsel" oder "beabsichtigter Spurwechsel" klassifiziert. Das Flussdiagramm der Figur 2 skizziert dabei ein entsprechendes Programm, welches im Mikrocomputer der in Figur 1 skizzierten Vorrichtung in vorbestimmten Zeitabständen durchlaufen wird. Im ersten Schritt 100 werden (einmal für die eine Fahrzeugseite, in einem anderen Durchlauf für die andere Fahrzeugseite) die oben skizzierten Fahrspurdaten eingelesen, d. h. der Verlauf der Fahrspurrandmarkierung, der Verlauf der Istfahrspur des Fahrzeugs, eine Größe für den lateralen Abstand zwischen Fahrzeug und Fahrspurrand, eine Größe für den Winkel zwischen Fahrzeugspur und Fahrspurrand, bzw. die weiteren oben genanten Betriebsgrößen, etc. Im darauffolgenden Schriu 102 wird überprüft, ob ein Verlassen der Fahrspur vorliegt bzw. ob ein solches Verlassen droht. Ist dies nicht der Fall, wird da Programm zum nächsten Zeitpunkt mit Schritt 100 fortgesetzt. Wird ein Verlassen bzw. ein drohendes Verlassen erkannt, so wird in Schritt 104 durch den Klassifikator anhand von Betriebsgrößen ermittelt, ob der Spurwechsel beabsichtigt oder unbeabsichtigt ist. Daraufhin wird in Schritt 106 überprüft, ob das Verlassen der Fahrspur beabsichtigt ist oder nicht. Ist es beabsichtigt, unterbleibt die Warnung bzw. die Querführungsreaktion und das Programm wird mit Schritt 100 wiederholt. Ist im anderen Fall jedoch erkannt worden, dass das Verlassen der Fahrspur unbeabsichtigt ist, so wird gemäß Schritt 108 optisch, akustisch und/oder haptisch gewarnt bzw. eine Spurhaltereaktion, beispielsweise das Ansteuern eine Stellelements zur Beeinflussung der Lenkung, ausgeführt.

Es sind verschiedene Ausführung zur Klassifizierung bekannt. Die grundsätzliche Vorgehensweise zur Klassifikation baut auf der Auswertung von wenigstens zwei Betriebsgrößen des Fahrzeugs auf, anhand derer auf das Verhalten des Fahrers geschlossen werden kann. Betriebsgrößen, die dafür geeignet sind, sind beispielsweise der Lenkwinkel (alternativ die Gierrate), die Geschwindigkeit des Fahrzeugs bzw. die Beschleunigung oder Verzögerung, der laterale Offset zwischen Fahrzeugspur und Fahrspurrand, insbesondere seine Veränderung, und/oder der Winkel der Fahrzeugspur zum Fahrbahnrand. Dabei wird in Bezug auf den Lenkwinkel das Lenkverhalten abgeprüft, welches bei Spurwechselabsicht deutlich erkennbar ist. Ein Lenkwinkel größer als ein vorbestimmter Wert, insbesondere eine entsprechend zeitliche Änderung des Lenkwinkels deutet auf Spurwechselabsicht hin. Während einer Kurvenfahrt ist hierbei die ermittelte Fahrbahnkrümmung zu berücksichtigen. Ferner liegt bei Spurwechselabsicht insbesondere nach links meistens eine Beschleunigung des Fahrzeugs vor, so dass bei einer Beschleunigung des Fahrzeugs bzw. einem Beschleunigungswunsch des Fahrers größer als ein vorgegebener Schwellenwert von einem beabsichtigten Spurwechsel auszugehen ist. Eine weitere geeignete Größe ist der laterale Abstand des Fahrzeugs zur Spurmarkierung, insbesondere dessen zeitliche Änderung. Diese stellt ein Maß für die Stärke, mit der sich ein Fahrzeug der Fahrspurrandmarkierung nähert, dar. Dieses Maß ist bei gewollten Spurwechseln erheblich größer als bei ungewollten. Entsprechendes gilt für den Winkel zur Fahrspurmarkierung, der bei gewollten Spurwechseln deutlich größer ist als bei ungewollten.

Zusammenfassend ist festzustellen, dass eine Klassifikation des Spurwechselvorgangs in ungewollte und gewollte Spurwechsel anhand von Betriebsgrößen des Fahrzeugs erfolgt, insbesondere wenn der Lenkwinkel einen Schwellenwert überschreitet und/oder der Beschleunigungswunsch des Fahrers einen Schwellenwert überschreitet und/oder der zeitliche Verlauf des lateralen Abstands zur Randmarkierung einen Schwellenwert überschreitet und/oder der Winkel zur Randmarkierung einen Schwellenwert überschreitet. Diese Kriterien werden gewichtet zur Klassifizierung des Spurwechselvorgangs in beabsichtigte und unbeabsichtigte Spurwechsel ausgenutzt, wobei im Allgemeinen ein beabsichtigter Spurwechsel bei Vorliegen wenigstens einer der beschriebenen Situationen erkannt wird, ein unbeabsichtigter bei Nichtvorliegen.

Im Bezug auf die Fahrerzustandserkennung sind aus dem Stand der Technik ebenfalls eine Vielzahl von Ansätzen beschrieben. Beispielsweise zeigt die DE10039795A1, den Fahrerzustand bzw. ein die Aufmerksamkeit des Fahrers repräsentierende Signal davon abzuleiten, ob eines von im Fahrzeug angeordneten Geräten benutzt wird. Ein weiteres Kriterium kann die Beobachtung des Fahrers durch eine Kamera und die Analyse der Blickrichtung, der Lidschlagfrequenz und/oder der Kopfposition des Fahrers sein. Ferner sind Sensoren beschrieben, die einen Müdigkeitszustand des Fahrers ermitteln, beispielsweise über eine Messung der Körpertemperatur und/oder der Pulsfrequenz. Aus diesen Größen wird ein den Fahrerzustand repräsentierendes Signal ermittelt, wobei beispielsweise die aus dem Stand der Technik bekannten Kriterien angewendet werden.

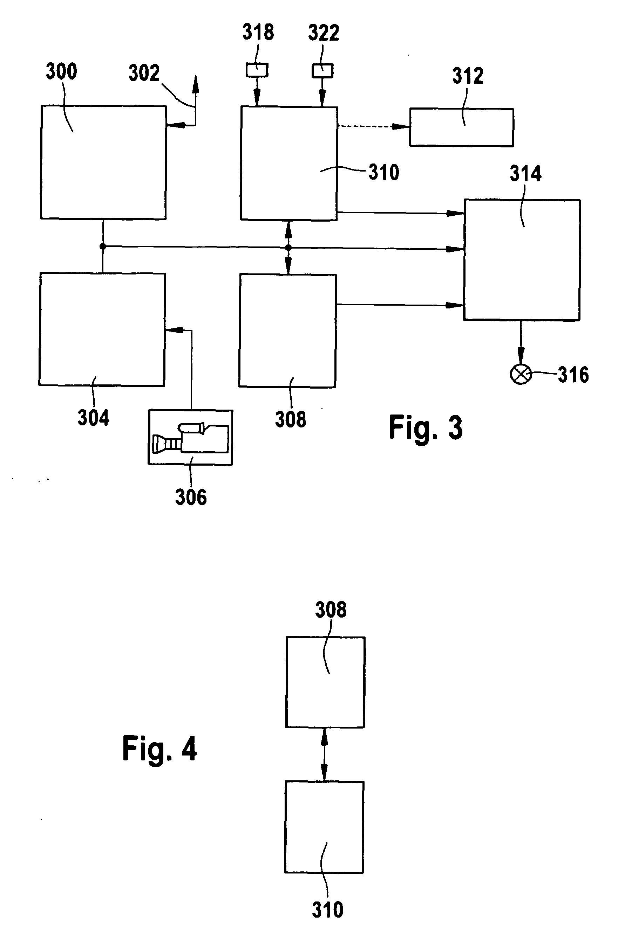

Figur 3 zeigt ein bevorzugtes Ausführungsbeispiel für den Aufbau der Verarbeitungseinheit aus verschiedenen Modulen, die im Wesentlichen als Softwaremodule realisiert sind. Ein erstes Modul 300 ist an ein fahrzeuginternes Bussystem 302, beispielsweise ein CAN-Bussystem, angebunden. Über das Bussystem werden der Verarbeitungseinheit verschiedene Betriebsgrößen des Fahrzeugs wie beispielsweise Lenkwinkel, Fahrpedalstellung, Bremsbetätigung, Gierrate, etc. zugeführt. Die zugeführten Größen werden gegebenenfalls aufbereitet an andere Module der Verarbeitungseinheit weitergegeben, die die entsprechenden Größen auswerten.

Ein zweites Modul 304 umfasst einen Algorithmus zur Spurerkennung. Diesem Algorithmus werden Daten zugeführt, welche das Bild einer Kamera 306 repräsentieren, die die Szene vor dem Fahrzeug aufnimmt. Der Spurerkennungsalgorithmus ermittelt aus dem Kamerabild, wie oben skizziert Größen wie den lateralen Abstand des Fahrzeugs zu den Randmarkierungen, den Winkel des Fahrzeugs zu den Randmarkierungen sowie die Krümmung der Fahrspur. Die ermittelten Größen werden anderen Modulen der Verarbeitungseinheit wie nachfolgend beschrieben zur Verfügung gestellt.

In einer anderen Ausführung werden alternativ oder ergänzend zu den ermittelten Größen (Spurdaten) eine Information übertragen, die einen Spurwechsel bzw. bevorstehenden Spurwechsel anzeigt. Dies wird wie oben erwähnt z.B. auf der Basis des Wertes des lateralen Abstandes und/oder der "time-to-line-crossing"-Zeit ermittelt.

Ein weiteres Modul ist das Modul 308 zur Spurwechselabsichtserkennung. Dieses Modul umfasst die Algorithmen, die unterscheiden, ob ein Spurwechsel absichtlich oder unabsichtlich vorgenommen wird. Eine Vorgehensweise zur Realisierung ist oben beschrieben. Dazu werden dem Modul 308 die notwendigen Betriebsgrößen zugeführt. Diese Betriebsgrößen werden über den fahrzeuginternen Bus zugeführt, wie beispielsweise Lenkwinkel oder Gierrate, Fahrzeuggeschwindigkeit, Beschleunigung, und/oder von dem Fahrspurdetektionsalgorithmus (Modul 304) zur Verfügung gestellt, wie beispielsweise der laterale Abstand zur Fahrbahnrandmarkierung, seine Veränderung und/oder der Winkel zum Fahrbahnrand. In bekannter Weise ermittelt das Modul 308 auf der Basis dieser Betriebsgrößen eine Information, ob der Spurwechsel absichtlich oder unabsichtlich erfolgt. Diese Information wird nachfolgend beschrieben noch mit dem Ergebnis der Fahrerzustandserkennung bewertet.

Letztere findet im Modul 310 statt, welchem ferner von entsprechenden Erfassungsvorrichtungen 318 bis 322 die zur Fahrerzustandserkennung ausgewerteten Größen zugeführt werden. Diese Größen sind wie oben erwähnt beispielsweise Informationen bezüglich der Bedienung von Geräten, physiologische Informationen wie Lidschlagfrequenz, Körperhaltungsinformationen, etc. Auf der Basis dieser Informationen ermittelt das Modul 310 einen Grad der Aufmerksamkeit des Fahrers (die Vigilanz des Fahrers), der in einem bevorzugten Ausführungsbeispiel dem Fahrer über ein Informationselement 312, beispielsweise eine Skala, angezeigt wird.

Ferner ist ein Modul 314 vorgesehen, welches den Warnalgorithmus umfasst. In diesem Modul werden die dem Modul zugeführten Informationen (Spurdaten bzw. Spurwechselsignal aus dem Modul 304, Fahrerabsichtserkennung aus dem Modul 308 und Fahrerzustand aus dem Modul 310) zugeführt. Aus den Spurdaten bzw. den Spurwechseldaten leitet das Modul 314 dann unter Berücksichtigung der Information zur Spurwechselabsicht und des Fahrerzustandes gegebenenfalls eine Warnung ab, die über das Wamelement 316 dem Fahrer angezeigt. Das Wamelement umfasst dabei je nach Ausführung Aktuatoren zur optischen, akustischen und/oder haptischen Warnung des Fahrers. Das Modul 314 erzeugt dabei ein Warnsignal, wenn ein unbeabsichtigter Spurwechsel und/oder eine stark verminderte Vigilanz des Fahrers vorliegt.

Ferner werden zwischen dem Modul 310 zur Fahrerzustandserkennung und dem Modul 308 zur Spurwechselabsichtserkennung Informationen ausgetauscht und in Abhängigkeit die ausgetauschten Informationen Maßnahmen im jeweiligen Modul ergriffen. Die Schnittstelle zwischen den beiden Modulen ist dabei derart definiert, dass vom Modul 310 zum Modul 308 eine Information bezüglich der Vigilanz des Fahrers (Fahrerzustand) übertragen wird, während vom Modul 308 zum Modul 310 eine Information bezüglich der Spurwechselabsicht übertragen wird.

Im bevorzugten Ausführungsbeispiel wird eine Größe, welche die Häufigkeit der unbeabsichtigten Spurüberschreitungen, vorzugsweise pro Zeiteinheit, repräsentiert, übertragen.

Ergänzend oder anstelle der Information bezüglich der Häufigkeit unbeabsichtigten Spurverlassens werden von Modul 308 zum Modul 310 die Häufigkeit auftretender unbeabsichtigter Überschreitungen wenigstens einer Schwelle, insbesondere einer Schwelle bezüglich des lateralen Abstandes zur Spurbegrenzung und /oder die Unterschreitung eines Schwellenwertes für den "Time to Line Crossing" - Wert, übermittelt.

Figur 4 zeigt ein Beispiel für die oben dargestellt Parametrisierung der beiden Module. Dabei werden die oben dargestellten Signale ausgetauscht. In den einzelnen Modulen werden die folgenden Schlussfolgerungen getroffen.

Anhand der vom Modul 310 erhaltenen Information über die Vigilanz des Fahrers bzw. des Fahrerzustandes wird die Funktion der Spurwechselabsichtserkennung abgeschaltet. Insbesondere werden bei schlechtem Fahrerzustand (stark verminderter Vigilanz) grundsätzlich von einem unbeabsichtigten Spurwechsel ausgegangen, somit vom Modul 314 bei jedem Spurwechsel gewarnt. Bei diesem Fall übermittelt das Modul 308 an das Modul 314 die Information eines unbeabsichtigten Spurwechsel als Default-Wert. In einer anderen Ausführungsform wird die Warnschwelle der Spurwechselabsichtserkennung adaptiv angepasst. Dabei werden im bevorzugten Ausführungsbeispiel die zur Spurwechselabsichtserkennung verwendeten Schwellen reduziert, um die Häufigkeit von Warnungen zu beeinflussen.

In einer bevorzugten Ausführungsform erhält die Spurwechselabsichtserkennung verschiedene Eingangssignalen (z.B. Lenkrad, Gaspedalstellung). Diese Eingaben werden gewichtet. Der gewichtete Eingangswert wird auf das Überschreiten einer bestimmten Schwelle (die Schwelle ist eine reelle Zahl auf dem Einheitsintervall [0,1], in der Regel 0.5) untersucht; Überschreitet er diese Schwelle, dann wird auf Fahrerabsicht geschlossen. Also: ist das Eingangssignal (gewichtet) > 0.5, liegt Fahrerabsicht vor, kleiner oder gleich 0,5 unbeabsichtigtes Spurverlassen. Erhöht man diese Schwelle (z.B. auf 0.9), erhöht sich die Zahl der Warnungen des Gesamtsystems, bei kleineren Schwelle (z.B. 0.1) kann die Zahl der Warnungen des Systems verringert werden. (Anmerkung: bei 0.0 gibt es nie Warnungen, bei 1.0 wird bei jedem Spurverlassen gewarnt). Diese Vorgehensweise wird in einer bevorzugten Ausführung zu Beeinflussung der Häufigkeit der Warnungen realisiert.

Bei Erkennung einer stark verminderter Vigilanz wird also die Schwelle der Absichtserkennung sukzessive erhöht, um häufigere Warnungen zu erhalten.

Bei wachen Fahrern (hoher Vigilanz) wird eine reduzierte Wamhäufigkeit angenommen, d. h. die Kriterien ab denen ein unbeabsichtigter Spurwechsel vorliegt erhöht. Bei schläfrigen Fahrern (verminderte Vigilanz) wird die Schwelle der Wamhäufigkeit angehoben, so dass der Fahrer häufiger gewarnt wird. Im bevorzugten Ausführungsbeispiel erfolgt dies durch eine Absenkung der für einen unbeabsichtigten Spurwechsel verantwortlichen Kriterien. Bei Feststellen einer stark verminderten Vigilanz wird die Spurwechselabsichtserkennung wie oben dargestellt ausgeschaltet.

Wie oben erwähnt erhält das Modul 310 vom Modul 308 Informationen bezüglich der Spurwechselabsicht bzw. des unbeabsichtigten Spurwechsels. Insbesondere werden Werte übertragen, welche die Häufigkeit der unbeabsichtigten Spurwechsel innerhalb einer vorgegebenen Zeitperiode oder das Auftreten von Unterschreitungen verschiedener Schwellenwerte, beispielsweise des lateralen Abstands zur Spurbegrenzung oder der Zeit bis zum Erreichen der Radmarkierung, etc., übertragen. Das Modul 310 wertet diese Informationen derart aus, dass bei ansteigender Häufigkeit auftretender unbeabsichtigter Überschreitungen der wenigstens einen Schwelle bzw. einem Ansteigen der Häufigkeit unbeabsichtigter Spurwechsel der Fahrerzustand in Richtung schlechter verändert wird, d. h. der Vigilanzwert des Fahrers reduziert wird.

## Patentansprüche

1. Verfahren zur Fahrerunterstützung, wobei ein Warnsignal beim Spurwechsel ausgegeben wird, **dadurch gekennzeichnet, dass** eine die Spurwechselabsicht des Fahrers kennzeichnende Information ermittelt wird, eine den Zustand des Fahrers repräsentierende Information gebildet wird, dass die Ausgabe des Wamsignals abhängig von der Spurwechselabsichtsinformation und der Fahrerzustandsinformation erfolgt, wobei die die Spurwechselabsicht des Fahrers kennzeichnende Information abhängig von der den Zustand des Fahrers repräsentierenden Information ist.

2. Verfahren nach Anspruch 1, **dadurch gekennzeichnet, dass** das Warnsignal bei einem unbeabsichtigten Spurwechsel erzeugt wird.

3. Verfahren nach einem der vorhergehenden Ansprüche, **dadurch gekennzeichnet, dass** das Warnsignal bei schlechterem Fahrerzustand bzw. bei verminderter Vigilanz des Fahrers ausgegeben wird.

4. Verfahren nach einem der vorhergehenden Ansprüche, **dadurch gekennzeichnet, dass** bei verminderter Vigilanz des Fahrers das Warnsignal ausgegeben wird, unabhängig davon, ob ein beabsichtigter oder unbeabsichtigter Spurwechsel vorliegt.

5. Verfahren nach einem der vorhergehenden Ansprüche, **dadurch gekennzeichnet, dass** der Fahrerzustand in Abhängigkeit von Informationen bezüglich der Häufigkeit und Art des Spurwechsels ermittelt wird.

6. Verfahren nach Anspruch 5, **dadurch gekennzeichnet, dass** der Fahrerzustand abhängig von der Häufigkeit unbeabsichtigter Spurwechsel und/oder abhängig von der Häufigkeit auftretender unbeabsichtigter Überschreitungen wenigstens eines Schwellenwertes wenigstens einer Größe bestimmt wird.

7. Verfahren nach einem der vorhergehenden Ansprüche, **dadurch gekennzeichnet, dass** bei hoher Vigilanz des Fahrers die Häufigkeit der Erzeugung des Warnsignals reduziert ist, bei einem Fahrer mit verminderter Vigilanz angehoben wird und bei stark verminderter Vigilanz des Fahrers generell bei jedem Spurwechsel erfolgt.

8. Vorrichtung zur Fahrerunterstützung, mit einer Verarbeitungseinheit, die derart konfiguriert ist, dass sie ein Warnsignal ausgibt, wenn ein Spurwechsel vorliegt, **dadurch gekennzeichnet, dass** die Verarbeitungseinheit derart konfiguriert ist, dass bei der Ausgabe des Warnsignals die Spurwechselabsicht und der Fahrerzustand berücksichtigt werden die Verarbeitungseinheit ein Modul (308) aufweist, welches eine Information ermittelt, ob ein Spurwechsel beabsichtigt ist oder nicht, und ein weiteres Modul (310) aufweist, welches eine Information über den Zustand des Fahrers ermittelt, wobei das Modul (308), welches eine Information ermittelt, ob ein Spurwechsel beabsichtigt ist oder nicht, derart ausgestaltet ist, dass die die Spurwechselabsicht des Fahrers kennzeichnende Information abhängig von der den Zustand des Fahrers repräsentierenden Information ist.

9. Vorrichtung nach Anspruch 8, **dadurch gekennzeichnet, dass** zwischen den beiden Modulen Informationen ausgetauscht werden, insbesondere das Modul zur Spurwechselabsichtserkennung vom Modul des Fahrerzustandes ein Maß für den Fahrerzustand bzw. die Vigilanz des Fahrers erhält und das Modul zur Fahrerzustandserkennung vom Modul der Spurwechselsabsichtserkennung ein Maß für die Häufigkeit der unbeabsichtigten Spurwechsel bzw. ein Maß für die Häufigkeit auftretender Überschreitungen von Schwellen wenigstens einer Größe, vorzugsweise des lateralen Abstandes zur Spurrandmarkierung und/oder der Zeit bis zum Kreuzen der Spurmarkierung, erhält.

## Claims

1. Method for providing driver assistance, wherein a warning signal is output in the event of a lane change, **characterized in that** an information item characterizing the driver's intention to change lanes is determined, and an information item which represents the driver's state is formed, **in that** the warning signal is output as a function of the lane change intention information and the driver's state information, wherein the information item which characterizes the driver's lane change intention is dependent on the information item which represents the driver's state.

2. Method according to Claim 1, **characterized in that** the warning signal is generated in the event of an unintended lane change.

3. Method according to one of the preceding claims, **characterized in that** the warning signal is output in the case of a relatively poor driver state or in the case of reduced vigilance by the driver.

4. Method according to one of the preceding claims, **characterized in that** in the case of reduced vigilance by the driver the warning signal is output irrespective of whether an intended or unintended lane change takes place.

5. Method according to one of the preceding claims, **characterized in that** the driver's state is determined as a function of information relating to the frequency and type of lane change.

6. Method according to Claim 5, **characterized in that** the driver's state is determined as a function of the frequency of unintended lane changes and/or as a function of the frequency of the occurrence of unintended upward transgressions of at least one threshold value of at least one variable.

7. Method according to one of the preceding claims, **characterized in that** in the case of high vigilance by the driver the frequency of generation of the warning signal is reduced, and in the case of a driver with reduced vigilance it is increased, and in the case of greatly reduced vigilance by the driver it generally occurs whenever there is a lane change.

8. Device according for providing driver assistance, having a processing unit which is configured in such a way that it outputs a warning signal when a lane change occurs, **characterized in that** the processing unit is configured in such a way that the intention to change lane and the driver's state are taken into account in the outputting of the warning signal, the processing unit has a module (308) which determines an information item indicating whether or not a lane change is intended, and has a further module (310) which determines an information item relating to the driver's state, wherein the module (308) which determines an information item indicating whether or not the lane change is intended is configured in such a way that the information item which characterizes the driver's intention to change lanes is dependent on the information item which represents the driver's state.

9. Device according to Claim 8, **characterized in that** information is exchanged between the two modules, in particular the module for detecting an intention to change lanes receives a measure of the driver's state or the driver's vigilance from the module of the driver's state, and the module for detecting the driver's state receives a measure of the frequency of the unintended lane changes or a measure of the frequency of the occurrence of upward transgressions of thresholds of at least one variable, preferably the lateral distance from the lane edge marking and/or the time until the lane edge marking is crossed, from the module for the detection of the intention to change lanes.

## Revendications

1. Procédé d'assistance au conducteur, dans lequel un signal d'alerte est émis en cas de changement de file, **caractérisé en ce qu'**une information caractérisant l'intention de changement de file du conducteur est déterminée, une information représentant l'état du conducteur est formée, **en ce que** l'émission du signal d'alerte a lieu en fonction de l'information d'intention de changement de file et de l'information d'état du conducteur, dans lequel l'information caractérisant l'intention de changement de file du conducteur est fonction de l'information représentant l'état du conducteur.

2. Procédé selon la revendication 1, **caractérisé en ce que** le signal d'alerte est généré dans le cas d'un changement de file non intentionnel.

3. Procédé selon une des revendications précédentes, **caractérisé en ce que** le signal d' alerte est émis dans le cas d'un mauvais état du conducteur ou d'une diminution de la vigilance du conducteur.

4. Procédé selon une des revendications précédentes, **caractérisé en ce que** le signal d'alerte est émis dans le cas d'une diminution de la vigilance du conducteur, indépendamment du fait qu'un changement de file intentionnel ou non intentionnel est présent.

5. Procédé selon une des revendications précédentes, **caractérisé en ce que** l'état du conducteur est déterminé en fonction d'informations relatives à la fréquence et au type de changement de file.

6. Procédé selon la revendication 5, **caractérisé en ce que** l'état du conducteur est défini en fonction de la fréquence d'un changement de file non intentionnel et/ou en fonction de la fréquence de survenue de dépassements non intentionnels d'au moins une valeur seuil d'au moins une grandeur.

7. Procédé selon une des revendications précédentes, **caractérisé en ce qu'**en cas de vigilance accrue du conducteur, la fréquence de génération du signal d'alerte est réduite, est augmentée en cas de vigilance réduite du conducteur et a lieu de manière générale à chaque changement de file en cas de vigilance fortement diminuée du conducteur.

8. Dispositif d'assistance au conducteur, comportant une unité de traitement, qui est configurée de telle sorte qu'elle émette un signal d'alerte quand un changement de file est présent, **caractérisé en ce que** l'unité de traitement est configurée de telle sorte que lors de l'émission du signal d'alerte, l'intention de changement de file et l'état du conducteur sont pris en compte, l'unité de traitement présente un module (308), qui détermine une information indiquant si un changement de file est intentionnel ou non, et présente un autre module (310), qui détermine une information relative à l'état du conducteur, dans lequel le module (308), qui détermine une information indiquant si un changement de file est intentionnel ou non, est configuré de telle sorte que l'information caractérisant l'intention de changement de file du conducteur est fonction de l'information représentant l'état du conducteur.

9. Dispositif selon la revendication 8, **caractérisé en ce que** des informations sont échangées entre les deux modules, notamment le module de reconnaissance d'intention de changement de file obtient du module d'état du conducteur une proportion de l'état du conducteur ou de la vigilance du conducteur et le module de reconnaissance d'état du conducteur obtient du module de reconnaissance d'intention de changement de file une proportion de la fréquence du changement de file non intentionnel ou une proportion de la fréquence de survenue de dépassements de seuils d'au moins une grandeur, de préférence l'écart latéral par rapport au marquage de bord et/ou le temps jusqu'au croisement du marquage de file.
